# EUROPEAN PATENT SPECIFICATION

(11) **EP 3 129 550 B1**
(45) Date of publication and mention of the grant of the patent: **04.05.2022**
(21) Application number: 15721755.5
(22) Date of filing: 09.04.2015
(51) Int. Cl.: D21H 19/54, D21H 19/82, D21H 19/40, D21H 23/56, D21H 21/16

(54) **COATED CARDBOARD AND A METHOD OF PRODUCING IT**
BESCHICHTETER KARTON SOWIE VERFAHREN ZUR HERSTELLUNG DAVON
CARTON REVÊTU ET SON PROCÉDÉ DE FABRICATION

(30) Priority: 09.04.2014 FI 20145337
(43) Date of publication of application: 15.02.2017
(73) Proprietor: Metsä Board Oyj, 02020 Metsä (FI)
(72) Inventor: HELLSTÉN, Kai, FI-44101 Äänekoski (FI); JUHELA, Kari, FI-44101 Äänekoski (FI); SUOKAS, Pekka, FI-44101 Äänekoski (FI)
(74) Representative: Laine IP Oy
(86) International application number: PCT/FI2015/050242
(87) International publication number: WO 2015/155413

(56) References cited:
- EP-A1- 2 267 222
- WO-A1-98/54409
- WO-A1-2010/141581
- WO-A1-2013/017857
- WO-A1-2013/164646
- WO-A2-2012/066308
- US-A- 5 635 279
- US-A- 5 855 973
- US-B1- 6 531 196

## Description

The present invention relates to a cardboard according to the preamble of Claim 1.

Such a product comprises a fibre layer that has two opposite surfaces, in which case there is a coating layer at least on its first surface.

The present invention also relates to a method, according to the preamble of Claim 9, of producing a cardboard that comprises barrier properties, and the use according to Claim 17.

Barriers are used in paper and cardboard products to prevent unwanted substances to penetrate through the material. Such unwanted substances can be for example: water, water vapour, oxygen, fat, flavourings and components of mineral oil. In particular, it has become important to prevent the penetration of the latter ones, because it has been found that from a recycled fibre cardboard that is placed directly against the food, such as cereals, mineral oil components, that are harmful to health and sourced from for example printing inks, migrate into the food. It has also been suspected that such a migration can take place indirectly from the outer package that comprises recycled fibre, through the fresh fibre cardboard of the inner package, into the food.

In cardboards, barriers that are extruded or applied as dispersions are generally used. The barrier is applied either onto the back side or the surface of the cardboard. Barrier application is usually carried out as an off-line operation, where the cardboard manufactured at the cardboard mill is lengthwise cut into suitable rolls, packed, transported to the processing plant, coated with a barrier at the processing plant, packed and sent to the customer.

With regard to the art, reference is made to publications WO 2013164646 A1, US 6545079 B1, EP 2777934 A1 and US 6531196 B1.

Known solutions are associated with problems. Barrier application as an off-line operation significantly increases production costs of the barrier coated cardboard, compared to cardboard which is not barrier coated, and reduces its competitiveness.

In barrier material applied as a dispersion, "pinholes", i.e. holes that are invisible to the eye, easily appear in the barrier layer, which holes ruin the barrier function. These pinholes may arise, for example, due to a rough base cardboard or instability of the application method. Also, off-line coating, as a separate operation, increases the risk of quality problems.

Application of the barrier as a separate layer onto either surface of the cardboard, immediately affects the other operating characteristics of the cardboard. If, for example, a barrier is applied onto the back side of a folding boxboard, it seals the surface pore structure and prevents the penetration of dispersion or hot melt adhesives. As a result, the production of conventional cardboard boxes requires the use of expensive special solutions, such as perforations and special adhesives.

If a barrier is applied, for example, onto the surface of a folding boxboard, the barrier prevents the printing inks from penetration, for example, in offset, gravure, flexo and ink jet printing. A separate barrier layer also increases the risk of poor toner adhesion in electrophotographic printing methods of digital printing.

A barrier that is applied onto either side of the surface of a cardboard can also cause blocking of the cardboard when reeling. In such a case, the cardboard layers on the machine reel adhere to each other, causing serious quality and runability problems.

When hydrophobic barrier materials are used, the cardboard recirculation back to the process is aggravated due to poor pulpability.

It is an aim of the present invention to eliminate at least some of the problems of the prior art and to provide an entirely novel solution of producing cardboard having barrier properties.

The invention is based on the idea that a barrier layer is formed by dispersion coating onto the fibre layer of the cardboard, which layer is comprised of a binder and slate-like pigments. The barrier layer is arranged between the surface and at least one coating layer. Case-specifically, there may be a surface-sizing layer or a coating layer between the surface and the barrier layer, respectively. The surface-sizing agent layer is formed onto the surface of the cardboard layer, prior to the application of the barrier layer onto the surface.

Cardboard thus obtained can be used in food packaging, in particular it can be used in pigment coated cardboard, such as fresh fibre cardboard, which has excellent properties of mineral oil migration and fat penetration prevention.

More specifically, the cardboard according to the present invention is characterized by what is stated in claim 1.

The method according to the present invention is, in turn, characterized by what is stated in claim 9.

The use according to the present invention is, in turn, characterized by what is stated in claim 17.

The present solution provides considerable advantages. Thus, according to the present invention, it is possible to apply online at the cardboard machine a barrier layer onto the surface side of the cardboard, before the pigment coating or before the second or last pigment coating, in which case excess handling and transport costs are eliminated.

With the barrier solution of the present invention it is possible to reduce the penetration rate of organic solvent vapour through the cardboard to even less than 10 %, compared to cardboard without the barrier.

The barrier has good ability to prevent mineral oil migration and fat penetration.

Conventional pigment coated fresh fibre cardboard has been observed in laboratory tests to reduce, by at least 20 % of the maximum potential, the total indirect mineral oil migration taking place from the outer package through the inner package cardboard. By adding to the cardboard the barrier solution according to this invention, it is possible to reduce the indirect mineral oil migration even to 1.5 % of the maximum potential.

Since the barrier layers in the barrier solution described in the present invention are between the fibre layer and the pigment coating layers, that are typically on the surface of the cardboard, and both outer surfaces have properties similar to the corresponding surface of conventional cardboard:
- side gluing with dispersion or hotmelt adhesives does not require unorthodox solutions,
- printing properties do not differ from conventional, and
- when reeling at the cardboard machine, blocking of cardboard does not occur due to the effect of the barrier.

Since the barrier can be applied online at the cardboard machine, the present invention enables delivery of the barrier product directly from the cardboard mill to the customer, without a separate external subcontractor needed to apply the barrier, which will bring significant savings in logistics costs.

Although, in one preferred embodiment, the barrier is brought to a cardboard surface that comprises chemical pulp fibre, it is also possible to form the described barrier onto a surface that comprises mechanical pulp.

The cardboard produced according to the present invention, is entirely pulpable and can be recycled to the cardboard mill process, like ordinary cardboard. In this regard, it clearly differs from, for example, conventional barrier cardboard brands that comprise extrusion films.

In a first embodiment, a barrier dispersion is prepared by dispersing a slate-like kaolin pigment in water and mixing this with either cooked or cold soluble conventional surface-sizing starch slurry.

In another embodiment, the dispersion is applied directly at the cardboard machine.

In a third embodiment, the dispersion is applied directly at the cardboard machine, after surface-sizing and preferably before any pigment coating.

In a fourth embodiment, the dispersion is applied as two separate layers directly at the cardboard machine, after the surface-sizing and before the pigment coating. The first layer is applied with a film size press, for example, in which case a contour type barrier coating layer is achieved, that follows the surface shapes and the roughness. By applying a second layer, any pin-holes in the first coating layer are blocked, in which case the total thickness of the barrier layer increases and the surface becomes smooth.

In the following, preferred embodiments are described with reference to the accompanying photographs.

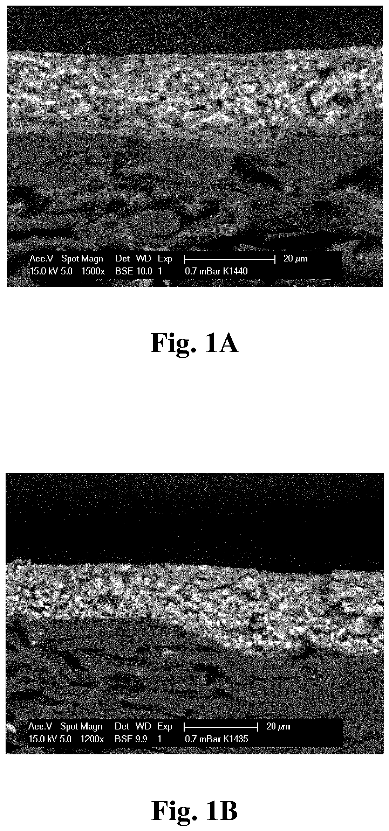

The electron microscopic picture in Figure 1A is a side view of a barrier layer under a pigment coating layer, and
the electron microscopic picture in Figure 1B shows the same cardboard as in Figure 1A but without a barrier layer.

In the following description, the terms "spread" and "apply" are used interchangeably.

As seen from the above, the present cardboard product is a coated food cardboard. Such a product comprises a fibre layer (cardboard layer) and a coating layer on at least one side of it.

The fibre matrix of the cardboard may comprise bleached or unbleached hardwood pulp, bleached or unbleached softwood pulp, bleached or unbleached mechanical pulp, bleached or unbleached chemi-mechanical pulp or recirculated broke pulp used in cardboard production, or mixtures thereof. In particular, mutual mixtures of the above described bleached and unbleached pulps, respectively, and mechanical or chemi-mechanical pulps, are possible. Recirculated broke pulp may also be used in any of the abovementioned pulps, mechanical pulps and chemi-mechanical pulps.

An example of a multilayer cardboard is a product that comprises in combination
- a first fibre layer having an outer surface and an inner surface,
- a second fibre layer, that is arranged at a distance from the first fibre layer and having an outer surface and an inner surface, in which case the inner surface of the second fibre layer is arranged on the inner side of the first fibre layer, and
- a third fibre layer, that is arranged between the first and the second fibre layer,
the fibre layers forming the fibre matrix of the cardboard, and a tracer containing surface-sizing layer being arranged on the outer surface of the first fibre layer, that forms the cardboard back.

In such a product, which in principal corresponds to a conventional folding boxboard, at least one of the first and second fibre layers comprises chemical cellulose pulp.

The first and the second fibre layer may comprise bleached or unbleached softwood and/or hardwood pulp. A third fibre layer comprises mechanical or chemi-mechanical pulp, unbleached or bleached softwood or hardwood pulp or broke pulp that is recirculated in the cardboard production.

Usually, the grammage of the cardboard layer is approximately 40-750 g/m², most suitably approximately 90-500 g/m², in particular approximately 110-400 g/m².

As an example, it may be mentioned that the grammage of a typical folding boxboard is approximately 150-350 g/m². Usually, a folding boxboard comprises 2-10 layers, in which case the grammage of the surface layer is approximately 40-80 g/m² and of the back 25-50 g/m².

Since the present solution is applied particularly as an online application, the cardboard layer to be treated is preferably in the form of a cardboard web, and the barrier layer is brought to the cardboard web coming from the dewatering of the cardboard machine. It is of course also possible to apply the barrier layer onto a sheet-like cardboard.

The surface of the cardboard is sized in order to modify its surface properties, for example to seal the surface and to reduce the moisture absorption, before the barrier layer is applied onto the cardboard layer. Such a surface sizing is in one embodiment combined with online application of the present barrier composition.

The surface-sizing layer typically comprises a synthetic, water-soluble polymer or a natural polymer or a derivative thereof. Surface-sizing agents may be divided into several groups, in which case the main division is between the cationic and anionic surface-sizing agents. In addition to these, to a certain extent also reactive sizing agents, such as alkyl-ketene dimer (AKD), that are otherwise mainly used in beater-sizing, are used in the surface-sizing. Also, perfluorinated substances, such perfluorinated phosphate and perfluorinated alkyl polymers may be used.

Cationic surface-sizing agents are cationic starches and starch derivatives, and corresponding carbohydrate based biopolymers. Examples of synthetic polymers are, for example, styrene/acrylate copolymers (SA), polyvinyl alcohols, polyurethanes and alkylated urethanes.

Anionic surface-sizing agents include anionic starches and starch derivatives, and corresponding carbohydrate based biopolymers, among others carboxymethylcellulose and its salts, and alkylcelluloses such as methyl and ethyl cellulose. Examples of synthetic polymers are styrene/maleic acid copolymer (SMA), di-isobutylene/maleic acid anhydride, styrene-acrylate copolymers, acrylonitrile/acrylate copolymers and polyurethanes and corresponding latex products that comprise the same chemical functionalities.

Many of the above-mentioned are supplied as viscous solutions, that are formed of sodium or ammonium salts of the corresponding polycarboxylic acids.

The percentage of the surface-sizing agent in the solution is generally approximately 0.01-25 % by weight, typically approximately 1-15 % by weight. The amount of the surface-sizing agent (grammage) is generally approximately 0.1-10 g/m², particularly approximately 0.2-5 g/m², for example approximately 0.3-3g/m².

The barrier layer is formed onto the cardboard layer after application of the surface-sizing agent. This layer comprises a binder and a slate-like mineral pigment. Most suitably, the barrier layer is formed with a dispersion coating.

Preferably, the pigment together with the binder, form a network structure that is capable of slowing down the penetration of molecules of unwanted substances, through the barrier layer.

The barrier layer comprises starch as non-hydrophobic binder, such as cooked or cold soluble surface sizing starch slurry. It has been found that the non-hydrophobic binder is particularly advantageous because it allows applying of coating paste onto the barrier layer, in such a way that the coating layer adheres to and remains on the surface of the barrier layer.

The barrier layer comprises of its dry weight 5-70 % mineral pigment and 95-30 % binder, in particular it comprises of its dry weight approximately 15-60 % mineral pigment and 85-40 % binder, possibly together with dispersion additives.

As examples of the slate-like mineral pigments of the barrier layer may be mentioned kaolin, talc and mixtures thereof.

In one embodiment, the barrier layer is formed of a dispersion that is prepared by dispersing the slate-like pigment in water and mixing this with a non-hydrophobic binder.

According to a more preferred embodiment, the barrier layer is formed of a dispersion, that is prepared by dispersing a slate-like pigment in water, in particular in order to generate a pigment dispersion that has a solids content of over 50 %. The dispersion thus obtained is preferably combined with the binder by mixing, in which case the pigment percentage of the dry matter of the dispersion that is used to form the barrier layer, is approximately 5-70 %, in particular approximately 15-60 %.

In one preferred embodiment, the dispersion is applied at the cardboard machine, i.e. as an online application, after surface-sizing and before the pigment coating.

This embodiment will provide interesting effects. Thus, the surface size will close the fibrous surface of the web thereby preventing excessive penetration of the binder of the barrier composition into the web. Instead, the binder remains in the barrier layer. Further, the barrier layer forms a smooth layer after a preceding surface sizing step, and this will further reduce the risk of formation of pin-holes. A smooth barrier layer, obtained as discussed, will also form a smooth base layer for one or several pigment coating layers. In combination, the pigment coating layers will be smooth and they will further improve the barrier effect of the barrier layer, as well as provide for a good printing surface. Good haptic and visual properties will also be attained.

The dispersion may be applied as a single application, but it can also be applied in several layers on top of each other. In a preferred embodiment, the dispersion is applied as at least two separate layers.

In one embodiment, the first dispersion layer is applied with a film size press, in which case a contour type barrier layer is achieved, that follows the surface shapes and the roughness.

A second layer is applied onto the first layer. It can be applied, for example, by using a blade or rod, and the application can therefore be carried out, for example, with a blade coating unit or a rod coating unit.

After the application of the second dispersion layer, or other dispersion layers, in one alternative, the barrier layers are left undoctored.

In a preferred embodiment, after the application of the second dispersion layer, or other dispersion layers, the layers are doctored with a rotating or static, smooth or grooved rod, an air knife, or a metallic or ceramic blade. It is also possible to proceed in this way, in case the dispersion coating is brought onto the surface of the cardboard by single application.

Preferably, the dispersion layer is applied from a pigment slurry having a relatively high dry matter content. In one embodiment, the dry matter content of the pigment is 10-40 %, in particular 12-39.5%, calculated on the weight of the slurry.

A typical grammage of the barrier layer is approximately 1-50 g/m², particularly approximately 5-40 g/m², most suitably approximately 10-30 g/m², per side or page of the cardboard.

The barrier layer increases the weight of the product only to a small extent, typically by approximately 5-30 %, compared to a product without a barrier layer.

In a dispersion that is suitable for forming a barrier layer, it is possible to use conventional additives and auxiliary agents, such as dispersing agents (for example sodium salt of polyacrylic acid), substances that affect the viscosity of the mixture (for example CMC, hydroxyethyl cellulose, polyacrylates, alginates, benzoate), so-called slip agents, hardeners used for improving water repulsion, optical auxiliary agents, anti-foaming agents, pH adjusting agents and preservatives, in the coating composition. Examples of the slip agents include sulphonate oils, esters, amines, calcium and ammonium stearates; the agents that improve water repulsion include glyoxal; the optical auxiliary agents include derivatives of diamino stilbene sulphonic acid; the anti-foaming agents include phosphate esters, silicones, alcohols, ethers, vegetable oils; the pH controlling agents include sodium hydroxide, ammonia; and finally the preservatives include formaldehyde, phenol and quaternary ammonium salts.

After the application of the barrier layer, the cardboard web or sheet to be coated is brought to the front coater.

Based on the above, also the following applications can be mentioned:
In one preferred embodiment, the binder used is cationic starch. The cationic degree of this may be in the range of DS 0.005 to 0.05.

The proportion of starch in the barrier layer may be 40-85 % by weight.

The surface-sizing starch used can be for example corn, potato, tapioca or pea starch.

In another preferred embodiment, that can be combined with the former, a thickening agent is used in the dispersion. The thickening agent used may be a synthetic thickening agent, the quantity of which may be even 10 % by weight of the dry matter. The synthetic thickening agent may be, for example, PVA or polyacrylate. The thickening agent may also be, for example, carboxymethylcellulose or microfibrillated pulp or a mixture thereof.

In a third preferred embodiment that can be combined with the applications mentioned above, a hardener is used in the dispersion, in an amount of up to 1 % by weight of the dry matter. The hardener used can be, for example, ammonium zirconium carbonate or potassium zirconium carbonate or the like.

In all of the above mentioned application cases, the dry matter may be within the range of 5-50 %. The Brookfield viscosity can typically be within the range of 30-2000 mPas, for example 30-800 mPas.

After that, the coating layer is applied onto the barrier layer. Typically, it comprises binder and light-refracting pigment or a mixture of pigments. The barrier layer can be dried before application of the coating layer, but it is also possible to bring the coating layer on the top of a moist barrier layer.

More preferably, the coating layer comprises pigment that refracts light better than the slate-like mineral pigment of the barrier layer. The coating layer may be generated by using one fine mineral pigment, or a mixture of several fine pigments, as follows:

| | |
|---|---|
| Coating pigment I (for example, fine carbonate) | 10-90 parts by weight |
| Coating pigment II (for example, fine kaolin) | 10 to 90 parts by weight |
| Pigments in total | 100 parts by weight |
| Binder | 1-20 parts by weight |
| Additives and auxiliary agents | 0.1-10 parts by weight |
| Water | balance |

Water is added to the coating paste of this type in such a way that the dry matter content is typically 50-75 %.

As examples of suitable pigments may be mentioned: precipitated calcium carbonate, ground calcium carbonate, calcium sulphate, calcium oxalate, aluminium silicate, kaolin (anhydrous aluminium silicate), aluminium hydroxide, magnesium silicate, talc (hydrous magnesium silicate), titanium dioxide and barium sulphate, and mixtures thereof. Synthetic pigments can also be used. Of the pigments mentioned above, the main pigments are kaolin, calcium carbonate, precipitated calcium carbonate and gypsum that in general constitute over 50 % of the dry solids in the coating composition. Calcined kaolin, sodium dioxide, satin white, aluminium hydroxide, sodium aluminate and plastics pigments are additional pigments, and their amounts are in general less than 25 % of the dry solids in the mix. Of the special pigments, special-quality kaolins and calcium carbonates, as well as barium sulphate and zinc oxide, should be mentioned.

In particular, the pigment of the coating layer is calcium carbonate, precipitated calcium carbonate, titanium dioxide, calcium sulphate, aluminium silicate, aluminium hydroxide, magnesium silicate or barium sulphate, or a mixture thereof.

In a refractive pigment-containing coating layer, it is possible to use any known binder that is commonly used as a binder in coating colours in the manufacturing of paper. Besides individual binders, it is possible to use mixtures of binders. Examples of typical binders include synthetic latexes made of polymers of ethylenically unsaturated compounds, for example butadiene-styrene type copolymers that possibly also comprise a comonomer that comprises a carboxyl group, such as acrylic acid, itaconic acid or maleic acid, and polyvinyl acetate having comonomers that comprise carboxyl groups. Together with the abovementioned agents, it is also possible to use as binders, for example, water-soluble polymers, starch, CMC, hydroxyethyl cellulose and polyvinyl alcohol.

In the coating composition, it is possible to use conventional additives and auxiliary agents (similarly as in the above barrier dispersion). Examples include dispersing agents, agents that affect the viscosity of the mixture, slip agents, hardeners, optical auxiliary agents, anti-foaming agents, pH controlling agents, and preservatives.

In one embodiment, the cardboard layer is coated only on one side, and there is a barrier layer only between this layer and the cardboard layer.

In another embodiment, on both sides of the cardboard layer there are coating layers, and preferably, barrier layers comprising binder and slate-like mineral pigment, are arranged between both coating layers and the corresponding cardboard surfaces.

The grammage of the coating layer can vary within wide limits, for example, according to the number of layers of the coating, and is typically approximately 0.5-50 g/m²/side, usually approximately 5-40 g/m²/side, for example approximately 5-30 g/m²/side. The amount of coating may be different in the surface and the back layers. For example, in the surface that forms the outer surface of the cardboard, the amount of coating is often approximately 10-35 g/m², and in the back, i.e. inner surface, approximately 5-20 g/m².

As described above, in laboratory, pilot and production scale experiments, the barrier according to the present invention was observed to have a good ability to prevent mineral oil migration and fat penetration.

Due to its network structure starch, which acts as the binder, slows down and prevents the penetration of unwanted substance molecules, in gas or liquid phase, through the barrier layer. The slate-like pigment creates in the barrier layer a complex structure that is filled with binder, in which case the path of the unwanted molecules is extended many times, compared to the binder layer only. The pigment also acts as a filler which reduces the production costs of the barrier.

When the barrier layers are located under the pigment coating, instead of the cardboard surfaces, the appearance, gluing, printing and other processing properties of the cardboard are maintained as unchanged as possible, compared to a standard product.

It should also be noted that there may be several coating layers in the cardboard. In one embodiment, the barrier layer is placed between the fibre layer which is surface-sized and the coating layer. However, it is also possible to place the barrier layer between the layers of a multilayer coating.

The coating layers are primarily those that comprise light-refracting pigment and provide the product with the required optical characteristics, for example brightness and opacity. ISO brightness is, for example over 85, in particular over 87, most suitably over 90, and the opacity is better than 85, in particular better than 87 %.

The following non-restricting example illustrates the preferred embodiments.

The cardboards used in the examples are folding boxboards, in which case the middle layer of the multi-layer cardboard is formed of mechanical pulp, and its surface layers of chemical pulp, i.e. cellulose.

### Example. Manufacturing of light online barrier cardboard with a pilot coating machine

Slate-like kaolin was elutriated in a laboratory mixer by first measuring the desired amount of water into a mixing vessel and then adding the dispersant while stirring. After that, dry kaolin powder was added gradually and the stirring was continued until the slurry became uniform. The stirring was continued for an additional hour. The dry matter content of the kaolin slurry was 67 %.

A cooked surface sizing starch, which acts as the binder, was prepared in a production scale apparatus by first elutriating the starch in water in a suspender and then cooking it in a continuous digester, and diluting it to a desired dry matter content (14.5 %).

The kaolin slurry and the cooked starch were mixed in such a way that the mixture ratio of their mass fractions was 50/50, in the order mentioned, and the dry matter content of the mixture was 17 %.

The back of an uncoated base cardboard was surface sized and the surface side of the cardboard was coated with a film size press, with the mixture of kaolin and cooked starch, , the mixture ratio of the mass fractions of which was 50/50. After that, the surface side was coated for a second time by using a blade coater, with a mixture of kaolin and cold soluble starch, the mixture ratio of the mass fractions of which was 50/50. Finally, a pigment coating was applied onto the surface side, as well as onto the reference cardboard, which was otherwise prepared in the same way, but instead of the two barrier layers, there was only a surface sizing also on the surface side, under the pigment coating.

Permeation rates of organic vapours were as follows:

| | |
|---|---|
| Uncoated cardboard | 0.93 g/dm²/day |
| Reference cardboard | 0.41 g/dm²/day |
| Light online barrier cardboard | 0.16 g/dm²/day |

Indirect migration from the outer packaging material comprising mineral oil was 4.8 % of the maximum potential.

Example shows that it is possible to prepare the barrier layer under the pigment coating.

## Claims

1. Coated food cardboard which comprises a cardboard layer and a coating layer on at least one side of it, the cardboard comprising a barrier layer between the coating layer and the cardboard, wherein the barrier layer contains binder and slate-like mineral pigment,
**characterized in that** the barrier layer comprises of its dry matter 5-70 % slate-like mineral pigment and 95-30 % starch as said binder and that there is a surface sizing agent layer between the cardboard surface and the barrier layer.

2. The cardboard according to Claim 1, **characterized in that** the barrier layer is formed by dispersion coating.

3. A cardboard according to any of the preceding claims, **characterized in that** the barrier layer comprises of its dry matter approximately 15-60 % mineral pigment and 85-40 % binder, possibly together with the additives of the dispersion.

4. A cardboard according to any of the preceding claims, **characterized in that** the binder of the barrier layer is cooked or cold soluble surface sizing starch slurry.

5. A cardboard according to any of the preceding claims, **characterized in that** the slate-like mineral pigment of the barrier layer is kaolin, talc or a mixture thereof.

6. A cardboard according to any of the preceding claims, **characterized in that** the weight of the barrier layer is approximately 1-50 g/m², in particular approximately 5-40 g/m², most suitably approximately 10-30 g/m², per cardboard side.

7. A cardboard according to any of the preceding claims, **characterized in that** the coating layer comprises binder and light-refracting pigment or mixture of pigments,
and preferably the coating layer comprises pigment, which refracts light better than the slate-like mineral pigment of the barrier layer, in particular the pigment of the coating layer is calcium carbonate, titanium dioxide, calcium sulphate, aluminium silicate, aluminium hydroxide, magnesium silicate or barium sulphate or a mixture thereof.

8. A cardboard according to any of the preceding claims, **characterized in that** on both sides of the cardboard layer there are coating layers and preferably, barrier layers that comprise binder and slate-like mineral pigment are arranged between both coating layers and the corresponding cardboard surfaces.

9. A method of producing coated cardboard, according to which method onto the cardboard is applied a coating mixture that comprises light-refracting pigment, in order to form a coating layer, wherein between the coating layer and the cardboard surface is formed, by dispersion coating, a barrier layer that is comprised of binder and slate-like pigments, **characterized in that** said binder is starch and the barrier layer is formed of a dispersion where the pigment and starch shares of the dry matter are approximately 5-70 % and 95-30 %, respectively and the cardboard is surface sized before it is dispersion coated with a dispersion that forms the barrier layer.

10. The method according to Claim 9, **characterized in that** the barrier layer is formed of a dispersion that is prepared by dispersing slate-like pigment in water and mixing this into starch, and preferably the barrier layer is formed of a dispersion that is prepared by dispersing slate-like pigment in water, particularly in order to generate a pigment dispersion that has a solids content of over 50 %, and this dispersion is combined with a binder by mixing, in which case the pigment and starch shares of the dry matter of the dispersion that is used to form the barrier layer are15-60 % and 85-40 %, respectively.

11. A method according to Claim 9 or 10, **characterized in** the dispersion is applied at the cardboard machine, after surface sizing and before pigment coating, preferably the dispersion is applied directly at the cardboard machine after surface sizing and before pigment coating.

12. A method according to any of the Claims 9-11, **characterized in** the dispersion is applied as at least two different layers, the first dispersion layer preferably being applied with a film size press, such that a barrier layer is achieved that follows the surface shapes and the roughness of the cardboard web, and the second dispersion layer preferably being applied with a blade coating unit or a bar coating unit.

13. A method according to any of Claims 9-12, **characterized in that** the dispersion layer is applied from the pigment slurry, the dry matter content of which is 10-40 %, in particular 12-39.5 %, calculated by weight of the slurry, and a barrier layer is being formed, the grammage of which is approximately 1-50 g/m², in particular approximately 5-40 g/m², most suitably approximately 10-30 g/m², per cardboard side.

14. A method according to any of Claims 9-13, **characterized in that** the cardboard is coated, after surface sizing, before it is dispersion coated with a dispersion that forms the barrier layer.

15. A method according to any of Claims 9-14, **characterized in that** a coating layer is formed that comprises pigment that refracts light better than the late-like mineral pigment in the barrier layer, in particular the coating layer pigment is calcium carbonate, precipitated calcium carbonate, titanium dioxide, calcium sulphate, aluminium silicate, aluminium hydroxide, magnesium silicate or a mixture thereof.

16. A method according to any of Claims 9-15, **characterized in that** on both sides of the cardboard layer, are brought coating layers, and preferably binder and barrier layers, that comprise slate-like mineral pigment, are arranged between both coating layers and the corresponding cardboard surfaces.

17. Use of a cardboard according to any of Claims 1-8 in food packages, for example in a pigment-coated cardboard, in particular in fresh fibre cardboard, that has properties of mineral oil migration and fat penetration prevention.

## Patentansprüche

1. Beschichteter Lebensmittelkarton, der eine Kartonschicht und eine Beschichtungsschicht auf mindestens einer Seite davon umfasst, wobei der Karton eine Sperrschicht zwischen der Beschichtungsschicht und dem Karton umfasst, wobei die Sperrschicht ein Bindemittel und ein schieferartiges Mineralpigment enthält, **dadurch gekennzeichnet, dass** die Sperrschicht in der Trockensubstanz, 5 - 70 % schieferartiges Mineralpigment und 95 - 30% Stärke als das Bindemittel umfasst und dass eine Oberflächenleimungsmittelschicht zwischen der Kartonoberfläche und der Sperrschicht vorhanden ist.

2. Karton nach Anspruch 1, **dadurch gekennzeichnet, dass** die Sperrschicht durch Dispersionsbeschichtung gebildet ist.

3. Karton nach einem der vorstehenden Ansprüche, **dadurch gekennzeichnet, dass** die Sperrschicht in der Trockensubstanz etwa 15 - 60 % mineralisches Pigment und 85 - 40 % Bindemittel, gegebenenfalls zusammen mit den Zusatzstoffen der Dispersion, umfasst.

4. Karton nach einem der vorstehenden Ansprüche, **dadurch gekennzeichnet, dass** das Bindemittel der Sperrschicht eine gekochte oder kaltlösliche oberflächenleimende Stärkeaufschlämmung ist.

5. Karton nach einem der vorstehenden Ansprüche, **dadurch gekennzeichnet, dass** das schieferartige mineralische Pigment der Sperrschicht Kaolin, Talkum oder ein Gemisch davon ist.

6. Karton nach einem der vorstehenden Ansprüche, **dadurch gekennzeichnet, dass** das Gewicht der Sperrschicht etwa 1 - 50 g/m², insbesondere etwa 5 - 40 g/m², am geeignetsten etwa 10 - 30 g/m², pro Kartonseite beträgt.

7. Karton nach einem der vorstehenden Ansprüche, **dadurch gekennzeichnet, dass** die Beschichtungsschicht ein Bindemittel und ein lichtbrechendes Pigment oder Pigmentgemisch umfasst,
und wobei die Beschichtungsschicht vorzugsweise ein Pigment umfasst, das das Licht besser bricht als das schieferartige mineralische Pigment der Sperrschicht, insbesondere das Pigment der Beschichtungsschicht Calciumcarbonat, Titandioxid, Calciumsulfat, Aluminiumsilikat, Aluminiumhydroxid, Magnesiumsilikat oder Bariumsulfat oder ein Gemisch davon ist.

8. Karton nach einem der vorstehenden Ansprüche, **dadurch gekennzeichnet, dass** auf beiden Seiten der Kartonschicht Beschichtungsschichten und vorzugsweise Sperrschichten, die Bindemittel und schieferartiges mineralisches Pigment umfassen, zwischen beiden Beschichtungsschichten und den entsprechenden Kartonoberflächen angeordnet sind.

9. Verfahren zur Herstellung von beschichtetem Karton, gemäß welchem Verfahren auf den Karton ein Beschichtungsgemisch aufgetragen wird, die lichtbrechendes Pigment umfasst, um eine Beschichtungsschicht zu bilden, wobei zwischen der Beschichtungsschicht und der Kartonoberfläche durch Dispersionsbeschichtung eine Sperrschicht gebildet wird, die aus einem Bindemittel und schieferartigen Pigmenten besteht, **dadurch gekennzeichnet, dass** das Bindemittel Stärke ist und die Sperrschicht aus einer Dispersion gebildet wird, bei der die Pigment- und Stärkeanteile an der Trockensubstanz jeweils etwa 5 - 70 % und 95 - 30 % betragen, und der Karton oberflächengeleimt wird, bevor er mit einer Dispersion beschichtet wird, die die Sperrschicht bildet.

10. Verfahren nach Anspruch 9, **dadurch gekennzeichnet, dass** die Sperrschicht aus einer Dispersion gebildet wird, die durch Dispergieren von schieferartigem Pigment in Wasser und dessen Einmischen in Stärke hergestellt wird, und wobei vorzugsweise die Sperrschicht aus einer Dispersion gebildet wird, die durch Dispergieren von schieferartigem Pigment in Wasser hergestellt ist, hergestellt wird, insbesondere um eine Pigmentdispersion zu erzeugen, die einen Feststoffgehalt von über 50 % aufweist, und diese Dispersion mit einem Bindemittel durch Mischen verbunden wird, wobei die Pigment- und Stärkeanteile an der Trockensubstanz der Dispersion, die zur Bildung der Sperrschicht verwendet wird, jeweils 15 - 60 % und 85 - 40 % betragen.

11. Verfahren nach Anspruch 9 oder 10, **dadurch gekennzeichnet, dass** die Dispersion an der Kartonmaschine nach der Oberflächenleimung und vor der Pigmentbeschichtung aufgetragen wird, wobei die Dispersion vorzugsweise direkt an der Kartonmaschine nach der Oberflächenleimung und vor der Pigmentbeschichtung aufgetragen wird.

12. Verfahren nach einem der Ansprüche 9 -11, **dadurch gekennzeichnet, dass** die Dispersion in mindestens zwei unterschiedlichen Schichten aufgetragen wird, wobei die erste Dispersionsschicht vorzugsweise mit einer Leimpresse aufgetragen wird, so dass eine Sperrschicht entsteht, die den Oberflächenformen und der Rauheit der Kartonbahn folgt, und die zweite Dispersionsschicht vorzugsweise mit einem Rakel- oder Stabstreichwerk aufgetragen wird.

13. Verfahren nach einem der Ansprüche 9 -12, **dadurch gekennzeichnet, dass** die Dispersionsschicht aus der Pigmentaufschlämmung, deren Trockensubstanzgehalt 10 - 40 %, insbesondere 12 - 39,5 %, bezogen auf das Gewicht der Aufschlämmung, beträgt, aufgetragen wird und eine Sperrschicht gebildet wird, deren Flächengewicht etwa 1 - 50 g/m², insbesondere etwa 5 - 40 g/m², am geeignetsten etwa 10 - 30 g/m², pro Kartonseite beträgt.

14. Verfahren nach einem der Ansprüche 9 - 13, **dadurch gekennzeichnet, dass** der Karton nach der Oberflächenleimung beschichtet wird, bevor er mit einer Dispersion beschichtet wird, die die Sperrschicht bildet.

15. Verfahren nach einem der Ansprüche 9 - 14, **dadurch gekennzeichnet, dass** eine Beschichtungsschicht gebildet wird, die ein Pigment umfasst, das das Licht besser bricht als das schieferartige Mineralpigment in der Sperrschicht, wobei es sich bei dem Pigment der Beschichtungsschicht insbesondere um Kalziumkarbonat, ausgefälltes Kalziumkarbonat, Titandioxid, Kalziumsulfat, Aluminiumsilikat, Aluminiumhydroxid, Magnesiumsilikat oder ein Gemisch davon handelt.

16. Verfahren nach einem der Ansprüche 9 - 15, **dadurch gekennzeichnet, dass** auf beiden Seiten der Kartonschicht Beschichtungsschichten aufgebracht werden und vorzugsweise zwischen beiden Beschichtungsschichten und den entsprechenden Kartonoberflächen Bindemittel- und Sperrschichten, die schieferartiges mineralisches Pigment umfassen, angeordnet werden.

17. Verwendung eines Kartons nach einem der Ansprüche 1 - 8 in Lebensmittelverpackungen, z.B. in einem pigmentbeschichteten Karton, insbesondere in Frischfaserkarton, der Eigenschaften zur Verhinderung von Mineralölmigration und Fettpenetration aufweist.

## Revendications

1. Carton alimentaire revêtu qui comprend une couche de carton et une couche de revêtement sur au moins un côté de celui-ci, le carton comprenant une couche barrière entre la couche de revêtement et le carton, dans lequel la couche barrière contient un liant et un pigment minéral de type ardoise, **caractérisé en ce que** la couche barrière comprend, pour ce qui est de sa matière sèche, 5-70 % de pigment minéral de type ardoise et 95-30 % d'amidon en tant que dit liant et **en ce qu'**il y a présence d'une couche d'agent de collage en surface entre la surface de carton et la couche barrière.

2. Carton selon la revendication 1, **caractérisé en ce que** la couche barrière est formée par revêtement par dispersion.

3. Carton selon l'une quelconque des revendications précédentes, **caractérisé en ce que** la couche barrière comprend, pour ce qui est de sa matière sèche, approximativement 15-60 % de pigment minéral et 85-40 % de liant, éventuellement combinés à des additifs de la dispersion.

4. Carton selon l'une quelconque des revendications précédentes, **caractérisé en ce que** le liant de la couche barrière est une bouillie d'amidon de collage en surface soluble cuite ou froide.

5. Carton selon l'une quelconque des revendications précédentes, **caractérisé en ce que** le pigment minéral de type ardoise de la couche barrière est du kaolin, du talc ou un mélange de ceux-ci.

6. Carton selon l'une quelconque des revendications précédentes, **caractérisé en ce que** le poids de la couche barrière est approximativement 1-50 g/m², en particulier approximativement 5-40 g/m², idéalement approximativement 10-30 g/m², par côté de carton.

7. Carton selon l'une quelconque des revendications précédentes, **caractérisé en ce que** la couche de revêtement comprend un liant et un pigment réfractant la lumière ou un mélange de pigments, et de préférence la couche de revêtement comprend un pigment, qui réfracte mieux la lumière que le pigment minéral de type ardoise de la couche barrière, en particulier le pigment de la couche de revêtement est du carbonate de calcium, du dioxyde de titane, du sulfate de calcium, du silicate d'aluminium, de l'hydroxyde d'aluminium, du silicate de magnésium ou du sulfate de baryum ou un mélange de ceux-ci.

8. Carton selon l'une quelconque des revendications précédentes, **caractérisé en ce que** des deux côtés de la couche de carton sont présentes des couches de revêtement et de préférence, des couches barrières qui comprennent un liant et un pigment minéral de type ardoise sont agencées entre les deux couches de revêtement et les surfaces de carton correspondantes.

9. Procédé de production d'un carton revêtu, selon lequel procédé sur le carton est appliqué un mélange de revêtement qui comprend un pigment réfractant la lumière, afin de former une couche de revêtement, dans lequel entre la couche de revêtement et la surface de carton est formée, par revêtement par dispersion, une couche barrière qui est composée d'un liant et de pigments de type ardoise, **caractérisé en ce que** ledit liant est de l'amidon et la couche barrière est formée d'une dispersion où les proportions de pigment et d'amidon de la matière sèche sont approximativement 5-70 % et 95-30 %, respectivement et le carton est collé en surface avant qu'il ne soit revêtu par dispersion avec une dispersion qui forme la couche barrière.

10. Procédé selon la revendication 9, **caractérisé en ce que** la couche barrière est formée d'une dispersion qui est préparée par dispersion d'un pigment de type ardoise dans de l'eau et son mélange dans de l'amidon, et de préférence la couche barrière est formée d'une dispersion qui est préparée par dispersion d'un pigment de type ardoise dans de l'eau, particulièrement afin de générer une dispersion de pigment qui présente une teneur en solides supérieure à 50 %, et cette dispersion est combinée à un liant par mélange, auquel cas les proportions de pigment et d'amidon de la matière sèche de la dispersion qui est utilisée pour former la couche barrière sont 15-60 % et 85-40 %, respectivement.

11. Procédé selon la revendication 9 ou 10, **caractérisé en ce que** la dispersion est appliquée au niveau d'une machine à carton, après le collage en surface et avant le revêtement de pigment, de préférence la dispersion est appliquée directement au niveau de la machine à carton après le collage en surface et avant le couchage de pigment.

12. Procédé selon l'une quelconque des revendications 9-11, **caractérisé en ce que** la dispersion est appliquée en au moins deux couches différentes, la première couche de dispersion étant de préférence appliquée avec une presse encolleuse à film, de sorte qu'une couche barrière soit réalisée qui suit les formes de surface et la rugosité de la bande de carton, et la seconde couche de dispersion étant de préférence appliquée avec une unité de revêtement à la lame ou une unité de revêtement par étalement.

13. Procédé selon l'une quelconque des revendications 9-12, **caractérisé en ce que** la couche de dispersion est appliquée à partir de la bouillie de pigment, dont la teneur en matière sèche est 10-40 %, en particulier 12-39,5 %, calculée en poids de la bouille, et une couche barrière étant formée, dont le grammage est approximativement 1-50 g/m², en particulier approximativement 5-40 g/m², idéalement approximativement 10-30 g/m², par côté de carton.

14. Procédé selon l'une quelconque des revendications 9-13, **caractérisé en ce que** le carton est revêtu, après le collage en surface, avant qu'il ne soit revêtu par dispersion avec une dispersion qui forme la couche barrière.

15. Procédé selon l'une quelconque des revendications 9-14, **caractérisé en ce qu'**une couche de revêtement est formée qui comprend un pigment qui réfracte mieux la lumière que le pigment minéral de type ardoise dans la couche barrière, en particulier le pigment de couche de revêtement est du carbonate de calcium, du carbonate de calcium précipité, du dioxyde de titane, du sulfate de calcium, du silicate d'aluminium, de l'hydroxyde d'aluminium, du silicate de magnésium ou un mélange de ceux-ci.

16. Procédé selon l'une quelconque des revendications 9-15, **caractérisé en ce que** sur les deux côtés de la couche de carton, sont amenées des couches de revêtement, et de préférence des couches de liant et barrières, qui comprennent un pigment minéral de type ardoise, sont agencées entre à la fois les couches de revêtement et les surfaces de carton correspondantes.

17. Utilisation d'un carton selon l'une quelconque des revendications 1-8 dans des emballages alimentaires, par exemple dans un carton revêtu de pigment, en particulier un carton de fibres fraîches qui présente des propriétés empêchant la migration de l'huile minérale et la pénétration de graisses.
